# EUROPEAN PATENT APPLICATION

(11) **EP 4 672 532 A1**
(43) Date of publication of application: **31.12.2025**
(21) Application number: 24760464.8
(22) Date of filing: 05.01.2024
(51) Int. Cl.: H02H 9/02, H02G 5/00, H01B 1/02, H01B 7/04, G01F 23/20

(54) **SUPERCONDUCTING FAULT CURRENT LIMITER HAVING WEIGHT SENSING UNIT, AND METHOD FOR MEASURING REFRIGERANT LEVEL USING SAME**

(30) Priority: 23.02.2023 KR 20230024408
(71) Applicant: LS Electric Co., Ltd., Gyeonggi-do 14119 (KR)
(72) Inventor: KIM, Sung Joon, Anyang-si, Gyeonggi-do 14118 (KR); KIM, Min Jee, Anyang-si, Gyeonggi-do 14118 (KR); LEE, Gyeong Ho, Anyang-si, Gyeonggi-do 14118 (KR); KANG, Sung Hee, Anyang-si, Gyeonggi-do 14118 (KR)
(74) Representative: K&L Gates LLP
(86) International application number: PCT/KR2024/000252
(87) International publication number: WO 2024/177271

(57) **Abstract**

The present invention relates to a superconducting fault current limiter and, more specifically, to a superconducting fault current limiter having a weight sensing unit, and a method for measuring a refrigerant level using same. The superconducting fault current limiter having a weight sensing unit, according to one aspect of the present invention, comprises: a tank unit; a superconducting element; a cooling unit; and a weight sensing unit. The method for measuring a refrigerant level using a superconducting fault current limiter having a weight sensing unit, according to one aspect of the present invention, comprises: a standard weight measurement step; a minimum level measurement step; a maximum level measurement step; and an appropriate level range identification step.

## Description

### TECHNICAL FIELD

The present invention relates to a superconducting fault current limiter, and more specifically to a superconducting fault current limiter having a weight sensing unit, and a method for measuring a refrigerant level using the same.

### BACKGROUND ART

In general, fault current fault limiters are power devices that protect a power system by reducing a fault current when an accident occurs in the power system. They play a role in minimizing the range of power outages caused by power system accidents and reducing damage to power devices on the power system lines.

These current fault limiters reduce a fault current to an appropriate value or less within a short period of time when the fault current occurs due to an accident in the power system, thereby preventing mechanical, thermal and electrical stress on the power system and improving the reliability of the power system.

However, due to a continuous increase in system fault current and the difficulty in developing a power system to respond thereto, the demand for the development of a current fault limiter that is capable of controlling fault current is rapidly increasing, but the development of a current fault limiter that can actually be applied to the system is delayed due to technical difficulties and difficulties in commercialization.

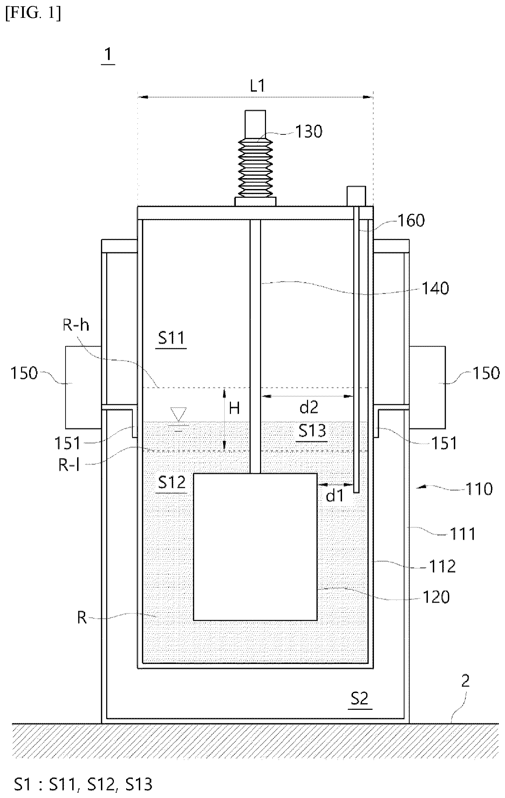

As the possibility of occurrence of a fault current increases due to the complexity of current power systems, the development of superconducting fault current limiters that apply nonlinear voltage-current characteristics of superconducting materials, such as those shown in FIG. 1, is actively underway.

In this superconducting fault current limiter 1, a superconducting element 120 configured to be electrically connected to an external power source and an input/output terminal 130 to allow an operating current to flow, quickly limits a fault current by generating a high resistance as it transitions from a superconducting state to a normal conducting state when a fault current is detected.

For example, if a fault current flows due to a line fault, it can be detected within 0.1 ms, and the fault current can be limited within several ms, thereby preventing a power outage and large-scale ripple fault.

In order to control a fault current by utilizing the properties of the superconducting element 120, the superconducting element 120 must normally maintain a superconducting state at a temperature of about 77K or less.

To this end, a conventional superconducting fault current limiter 1 is configured such that a superconducting element 120 is immersed in a cooling tank 112 containing a refrigerant R in an extremely low temperature liquid state, and liquid nitrogen is used as the refrigerant R.

In other words, the superconducting element 120 is maintained to be immersed in a refrigerant (supercooled liquid nitrogen) for a uniform temperature, electrical insulation and rapid recovery.

Meanwhile, the refrigerant (R; liquid nitrogen) in which the superconducting element 120 is immersed is supercooled, and since vaporization does not occur, the internal pressure is maintained constant.

However, this example of maintaining a pressure is an ideal condition, and during the operation of the superconducting fault current limiter 1, the refrigerant R in which the superconducting element 120 is immersed may vaporize from a supercooled state to a saturated state or beyond the saturated state due to the action of various variables.

For example, the exterior of the cooling tank 112 is included in a vacuum tank 111 having a vacuum space S2 and is insulated, and the exterior of the vacuum tank 111 will be at room temperature.

In addition, since the superconducting element 120 is electrically connected to an external power source, a current-conducting wire 140 and an input/output terminal 130 such that an operating current flows, a heat load cannot help but be generated on an upper part of the superconducting element 120, and this heat load acts as a variable as described above and is transferred to the refrigerant R to induce the vaporization of a refrigerant.

In addition, the airtightness of the cooling tank 112 may also act as a variable as described above.

Accordingly, a cooling unit 150 is essentially required for the superconducting fault current limiter 1 to maintain this refrigerant R (liquid nitrogen) in a liquid state and to enable the superconducting element 120 to reach a superconducting state.

The vaporized refrigerant (gaseous nitrogen) is condensed and liquefied again according to the operation of the cooling unit 150 and flows into a liquid-state refrigerant by gravity to maintain an appropriate level.

Meanwhile, in order for the superconducting element 120 in the superconducting fault current limiter 1 to perform its original role, it is necessary to always maintain a state in which the superconducting element 120 is immersed in the refrigerant R.

Accordingly, the refrigerant R needs to maintain a liquid level in an appropriate region S13 within a maximum refrigerant level R-h and a minimum refrigerant level R-1 inside the cooling tank 112.

In a conventional superconducting fault current limiter 1, a bar-shaped refrigerant level meter 160 inserted from an upper outside to a lower inside of a cooling tank 112 was used to measure the level of the refrigerant R.

The level meter 160 is a device that measures the length immersed in the refrigerant R, and as it uses a contact measurement method, it can only be used when it comes into contact with the refrigerant R inside the cooling tank 112.

Level measurement (sensing) using this level meter 160 has the convenient advantage of being able to numerically check the level.

However, this level meter 160 must be electrically grounded while being fixed to an upper plate of the cooling tank 112 equipped with the input/output terminal 130 and the like.

Accordingly, the level meter 160 introduced into the cooling tank 112 during the operation of the superconducting fault current limiter 1 inevitably required set insulation distance d1, d2 from the current-conducting wire 140 and the superconducting element 120 inside the cooling tank 112.

Meanwhile, the current superconducting fault current limiter 1 is required to be more compact, that is, have a smaller size, depending on the efficiency.

However, there was a problem in that the size of the cooling tank 112 had to increase due to the insulation distances d1, d2 that had to be inevitably secured between the level meter 160, the current-conducting wire 140 and the superconducting element 120, and thus, the size of the entire superconducting fault current limiter 1 also had to increase.

In addition, there was a problem in that the level meter 160 with the upper part grounded caused heat load generation, making it difficult to maintain the temperature inside the cooling tank 112.

Accordingly, there is an urgent need for the development of a superconducting fault current limiter that is capable of measuring the level of the refrigerant R inside a cooling tank 112 while making it smaller by removing the level meter 160.

### DISCLOSURE

### TECHNICAL PROBLEM

The present invention has been devised to solve the above problems, and an object of the present invention is to provide a superconducting fault current limiter having a weight sensing unit that is capable of measuring the level of a refrigerant without using a conventional level meter.

Another object of the present invention is to provide a method for measuring a refrigerant level using a superconducting fault current limiter having a weight sensing unit.

Still another object of the present invention is to provide a superconducting fault current limiter that can be manufactured more compactly by eliminating a level meter and providing a weight sensing unit.

The problems of the present invention are not limited to the problems mentioned above, and other problems that are not mentioned will be clearly understood by those skilled in the art to which the present invention pertains from the description below.

### TECHNICAL SOLUTION

According to an aspect of the present invention, provided is a superconducting fault current limiter having a weight sensing unit.

The superconducting fault current limiter having a weight sensing unit includes a tank unit in which a refrigerant in a cryogenic liquid state is accommodated; a superconducting element that is accommodated in the tank unit and immersed in the refrigerant, and is electrically connected to an input/output terminal that is exposed to an outside of the tank unit by a current-conducting wire; a cooling unit positioned on a side part of the tank unit to cool the refrigerant; and a weight sensing unit provided on a lower side of the tank unit to measure a change in weight of the tank unit.

In this case, the weight sensing unit may be arranged in plurality.

Meanwhile, the tank unit includes a cooling tank configured to accommodate the refrigerant and the superconducting element inside, and a vacuum tank that surrounds the cooling tank and forms a vacuum space between the cooling tank and the superconducting element.

The superconducting fault current limiter having a weight sensing unit further include a rigid busbar that is supported on one side by an external structure and electrically connected to the input/output terminal on the other side.

In this case, the weight sensing unit is configured to adjust a height of the tank unit.

For example, the weight sensing unit includes a weight sensor that is supported on a bottom surface where the superconducting fault current limiter is installed, a support frame that is extended to protrude outward from a lower side of the tank unit, and a height adjustment screw that is supported on one side by the weight sensor and penetrating the support frame.

The superconducting fault current limiter having a weight sensing unit further include a busbar that is supported on one side by an external structure, and electrically connected to the input/output terminal on the other side.

In this case, the busbar may be composed partly or entirely of a flexible conductor.

In this case, the flexible conductor may be composed of any one of a cable, a shunt flexible busbar or a braided flexible busbar.

According to another aspect of the present invention, provided is a method for measuring a refrigerant level using a superconducting fault current limiter having a weight sensing unit.

The method for measuring a refrigerant level using a superconducting fault current limiter having a weight sensing unit includes a standard weight measurement step for measuring a standard weight value of a tank unit by measuring a weight of the tank unit through a weight sensing unit while a superconducting element does not inject a refrigerant in the tank unit in a state of no electrical conduction; a minimum level measurement step of injecting the refrigerant into the tank unit where the standard weight value is measured to reach a refrigerant minimum level, and then measuring a weight of the tank unit through the weight sensing unit to measure a minimum level weight value of the tank unit; a maximum level measurement step of injecting the refrigerant into the tank unit where the minimum level weight value is measured to reach a refrigerant maximum level, and then measuring a weight of the tank unit through the weight sensing unit to measure a maximum level weight value of the tank unit; and an appropriate level range identification step of inputting a weight of the tank unit corresponding to a difference value of the maximum level weight value and the minimum level weight value as an appropriate level range value, and correcting an amount of the refrigerant to correspond to the appropriate level weight value.

In this case, the method further includes a process of installing a level measuring device prior to performing the minimum level measurement step on a superconducting fault current limiter that has undergone the standard weight measurement step.

In addition, the method further includes a process of removing the level measuring device installed on a superconducting fault current limiter that has undergone the maximum level measurement step.

Meanwhile, for the level measuring device, any one of a level meter, a camera, a dip stick, a buoy or a naked eye may be used.

Meanwhile, the refrigerant minimum level may have an interval of 10 to 20 cm from the uppermost surface of the superconducting element.

### ADVANTAGEOUS EFFECTS

According to the above configuration, the superconducting fault current limiter having a weight sensing unit according to the present invention and the method for measuring a refrigerant level using the same have the effect of measuring a change in the weight of the tank unit using the weight sensing unit and thereby measuring a change in the level of the refrigerant in the cooling tank.

In addition, the distance between a current-conducting wire and an inner surface of the cooling tank and the insulation distance between a superconducting element and an inner surface of the cooling tank can be minimized, which has the effect of enabling the implementation of a smaller superconducting fault current limiter.

In addition, it has the effect of blocking stress generated by a busbar connected to an external structure by configuring such that it can adjust the height of the tank unit supported by the weight sensor.

Moreover, by replacing one side of the busbar connected to the external structure in a superconducting fault current limiter having a weight sensing unit with a flexible conductor, it has the effect of blocking stress generation.

It should be understood that the effects of the present invention are not limited to the effects described above, but include all effects that can be inferred from the constitutions of the invention described in the detailed description or claims of the present invention.

### DESCRIPTION OF DRAWINGS

FIG. 1 is a schematic diagram showing a superconducting fault current limiter for measuring a refrigerant level using a level meter according to the prior art.
FIG. 2 is a schematic diagram showing a superconducting fault current limiter having a weight sensing unit according to an embodiment of the present invention.
FIG. 3 is a schematic block diagram showing a method for measuring a refrigerant level using a superconducting fault current limiter having a weight sensing unit according to an embodiment of the present invention.
FIG. 4 is a schematic diagram showing the measurement of weight in a state where no refrigerant is injected according to a standard weight measurement step in a method for measuring a refrigerant level using a superconducting fault current limiter having a weight sensing unit according to an embodiment of the present invention.
FIG. 5 is a schematic diagram showing the measurement of weight in a state where a refrigerant corresponding to a minimum refrigerant level is injected according to a minimum level measurement step in the method for measuring a refrigerant level using a superconducting fault current limiter having a weight sensing unit according to an embodiment of the present invention.
FIG. 6 is a schematic diagram showing the measurement of weight in a state where a refrigerant corresponding to a maximum refrigerant level is injected according to a maximum level measurement step in the method for measuring a refrigerant level using a superconducting fault current limiter having a weight sensing unit according to an embodiment of the present invention.
FIG. 7 is a schematic diagram showing refrigerant level measurement using a camera in the method for measuring a refrigerant level using a superconducting fault current limiter having a weight sensing unit according to an embodiment of the present invention.
FIG. 8 is a schematic diagram showing refrigerant level measurement using a naked eye in the method for measuring a refrigerant level using a superconducting fault current limiter having a weight sensing unit according to an embodiment of the present invention.
FIG. 9 is a schematic diagram showing a state in which stress is generated by a busbar connected to an external structure in the superconducting fault current limiter having a weight sensing unit according to an embodiment of the present invention.
FIG. 10 is a schematic diagram showing a state in which height adjustment is enabled in the superconducting fault current limiter having a weight sensing unit according to an embodiment of the present invention, thereby preventing the generation of stress by a busbar connected to an external structure.
FIG. 11 is a schematic diagram showing a state in which stress generation is prevented through a change in the material of a busbar connected to an external structure in the superconducting fault current limiter having a weight sensing unit according to an embodiment of the present invention.

### BEST MODE

The present invention, in the best mode, proposes a superconducting fault current limiter having a weight sensing unit, which includes a tank unit in which a refrigerant in a cryogenic liquid state is accommodated; a superconducting element that is accommodated in the tank unit and immersed in the refrigerant, and is electrically connected to an input/output terminal that is exposed to an outside of the tank unit by a current-conducting wire; a cooling unit positioned on a side part of the tank unit to cool the refrigerant; and a weight sensing unit provided on a lower side of the tank unit to measure a change in weight of the tank unit.

In addition, the present invention, in the best mode, proposes a method for measuring a refrigerant level using a superconducting fault current limiter having a weight sensing unit, including a standard weight measurement step for measuring a standard weight value of a tank unit by measuring a weight of the tank unit through a weight sensing unit while a superconducting element does not inject a refrigerant in the tank unit in a state of no electrical conduction; a minimum level measurement step of injecting the refrigerant into the tank unit where the standard weight value is measured to reach a refrigerant minimum level, and then measuring a weight of the tank unit through the weight sensing unit to measure a minimum level weight value of the tank unit; a maximum level measurement step of injecting the refrigerant into the tank unit where the minimum level weight value is measured to reach a refrigerant maximum level, and then measuring a weight of the tank unit through the weight sensing unit to measure a maximum level weight value of the tank unit; and an appropriate level range identification step of inputting a weight of the tank unit corresponding to a difference value of the maximum level weight value and the minimum level weight value as an appropriate level range value, and correcting an amount of the refrigerant to correspond to the appropriate level weight value.

### MODES OF THE INVENTION

Hereinafter, with reference to the attached drawings, embodiments of the present invention will be described in detail so that those skilled in the art can easily practice the present invention. The present invention may be implemented in various different forms and is not limited to the embodiments described herein. In order to clearly describe the present invention, parts that are not related to the description are omitted in the drawings, and the same reference numerals are assigned to the same or similar components throughout the specification.

The words and terms used in the present specification and claims should not be construed as limited to their usual or dictionary meanings, but should be interpreted as having meanings and concepts consistent with the technical idea of the present invention, in accordance with the principles by which the inventor can define terms and concepts in order to best describe his or her invention.

Therefore, the embodiments described in the present specification and the configurations illustrated in the drawings correspond to a preferred embodiment of the present invention and do not represent all of the technical ideas of the present invention, and thus, the corresponding configurations may have various equivalents and modified examples that can replace the same at the time of filing of the present invention.

In the present specification, it should be understood that terms such as "include" or "have" are intended to describe the presence of a feature, number, step, operation, component, part or combination thereof described in the specification, but do not exclude in advance the possibility of the presence or addition of one or more other features, numbers, steps, operations, components, parts or combinations thereof.

When a component is said to be "in front of," "behind," "above" or "below" another component, unless there are special circumstances, it includes not only being positioned "in front of," "behind," "above" or "below" the other component in direct contact with, but also cases where there are other components intervening therebetween. In addition, when a component is said to be "connected" to another component, unless there are special circumstances, it includes cases where they are indirectly connected to each other as well as cases where they are directly connected to each other.

Additionally, in explaining the present invention, specific descriptions of related known functions or configurations will be omitted in order to avoid obscuring the gist of the present invention.

Hereinafter, the superconducting fault current limiter having a weight sensing unit according to an embodiment of the present invention and a refrigerant level measurement method using the same will be described with reference to the drawings.

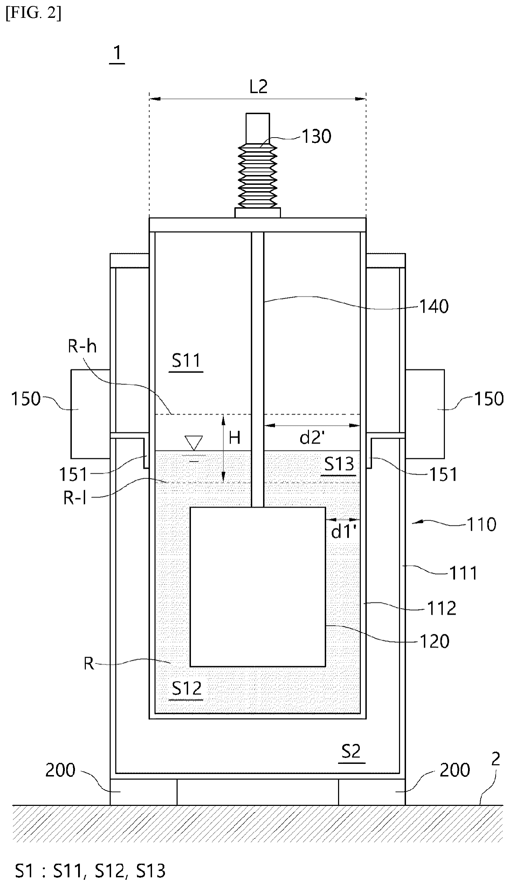

First of all, FIG. 2 is a schematic diagram showing a superconducting fault current limiter having a weight sensing unit according to an embodiment of the present invention.

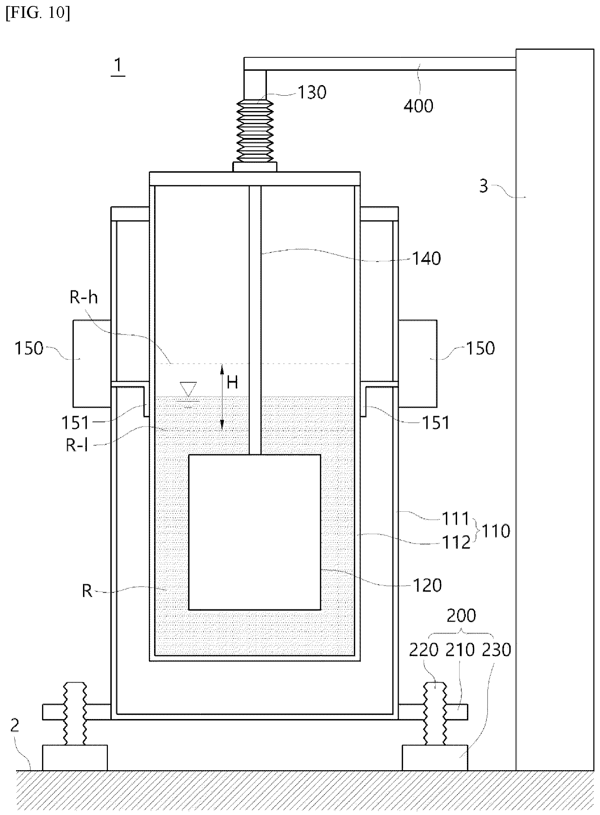

As described above, the superconducting fault current limiter 1 having a weight sensing unit according to an embodiment of the present invention is a device for controlling a fault current generated in the driving current by being electrically connected to a busbar 400 (FIG. 10) through which the driving current flows.

Such a superconducting fault current limiter 1 may be installed and operated so as to be electrically connected to an external structure 3 (FIG. 10) within a power facility.

To this end, the superconducting fault current limiter 1 having a weight sensing unit according to an embodiment of the present invention largely includes a tank unit 110, a superconducting element 120, a cooling unit 150 and a weight sensing unit 200.

First of all, the tank unit 110 has a body shape with a set height and width, and may have various shapes such as a cylinder or polygonal column.

In addition, the tank unit 110 has a double structure including a cooling tank 112 filled with a refrigerant R and a vacuum tank 111 surrounding the cooling tank 112.

The cooling tank 112 is at least partially filled with a cryogenic liquid refrigerant R in an internal space S1, and a superconducting element 120 is accommodated and immersed inside the filled liquid refrigerant R.

Such a cooling tank 112 is maintained in a sealed state during an operation of the superconducting fault current limiter 1.

Meanwhile, the internal space S1 of the cooling tank 112 may be divided into a lower liquid region S12 filled with a cryogenic liquid refrigerant R, and a gas region S11 filled with an inert gas such as neon or helium injected for insulation in the upper part of the liquid region S12.

Meanwhile, the interior of the cooling tank 112 has an internal pressure of 3 bar, for example, a pressure set higher than the external pressure, and the gas injected into the gas region S11 maintains the internal pressure of the cooling tank 112.

Meanwhile, it is apparent that the vaporized gaseous refrigerant R may rise and be included in this gaseous region S11 by the action of various variables.

In addition, the internal space S1 of the cooling tank 112 may recognize a part of the liquid region S12 and a part of the gas region S11 as a refrigerant level appropriate level region S13.

In other words, the appropriate level region S13 of the refrigerant R has an area between the maximum refrigerant level R-h and the minimum refrigerant level R-1.

In order for the superconducting fault current limiter 1 having a weight sensing unit according to an embodiment of the present invention to be operated, the level of the refrigerant R must be maintained within an appropriate level region S13.

Meanwhile, the vacuum tank 111 is configured to surround the cooling tank 111, and forms a vacuum space S1 between the same and the cooling tank 111, thereby blocking and insulating the cooling tank 111 from the outside.

It is desirable that the vacuum tank 111 also be maintained in a sealed state during an operation of the superconducting fault current limiter 1, just like the cooling tank 112.

Next, the superconducting element 120 constituting the superconducting fault current limiter 1 having a weight sensing unit is accommodated inside the cooling tank 112 constituting the tank unit 110 as described above, and is maintained in a state of being immersed in the refrigerant R on the liquid region S12.

In addition, such a superconducting element 120 has a structure in which it is electrically connected to the input/output terminals 130 exposed to an outside of the tank unit 110 by a current-conducting wire 140 toward the upper side.

Meanwhile, these superconducting elements 120 are not composed of a single element, and it is apparent that a plurality of elements may be stacked and arranged in a series or parallel manner to form a single module. The superconducting elements 120 in the drawings should be recognized as modules in which a plurality of elements are connected.

Meanwhile, it is apparent that these superconducting elements 120 may be provided in a plurality of units depending on the characteristics of the power system. For example, a three-phase power system may include three superconducting elements 120 and be arranged radially symmetrically based on the central axis of the tank unit 110.

In this case, since driving currents having different phases flow through each of a plurality of superconducting elements 120, they must be spaced apart from each other such that an insulation distance can be secured.

Although not shown, it is apparent that these superconducting elements 120 have a structure including a support structure and a reinforcing structure such that they can be accommodated and placed inside the cooling tank 112 and maintained therein.

Meanwhile, when a fault current is detected, these superconducting elements 120 generate a high resistance by transitioning from a superconducting state to a normal conducting state, thereby limiting the fault current within a short period of time.

Accordingly, since a plurality of superconducting elements 120 form a single module, in order for the superconducting elements forming the module to have the same superconducting properties, it is very important that the space in which the superconducting elements 120 are placed is maintained at the same temperature.

To this end, the superconducting element 120 is maintained to be immersed in a cryogenic liquid state refrigerant (e.g., liquid nitrogen) R.

Meanwhile, the lower the liquid level of the refrigerant R, the better because the load on the cooling unit 150 described below is reduced. However, if the liquid level becomes too low and the superconducting element 120 is exposed to the gas region S11, the superconducting element 120 may not perform its function, and thus, it is necessary to maintain an appropriate level.

In other words, the liquid refrigerant R must be maintained within a region between the maximum refrigerant level R-h and the minimum refrigerant level R-1 within the cooling tank 112 of the tank unit 110, that is, within the appropriate level region S13.

In this case, the minimum refrigerant level R-1 must have a height such that the superconducting element 120 described above is not exposed to the gas region S11.

Preferably, the minimum refrigerant level R-1 is set to have an interval of 10 to 20 cm from the uppermost surface of the superconducting element 120.

The liquid refrigerant R at the uppermost side may vaporize depending on variables and cause a boiling phenomenon, which may affect the superconducting element 120. Therefore, the minimum refrigerant level R-1 has an interval of 10 to 20 cm from the uppermost surface of the superconducting element 120.

In the most preferred embodiment, the minimum refrigerant level R-1 is set to have an interval of 20 cm from the uppermost surface of the superconducting element 120.

Next, the cooling unit 150 constituting the superconducting fault current limiter 1 having a weight sensing unit according to an embodiment of the present invention is placed on a side part of the tank unit 110 as described above and serves to cool the refrigerant R.

It is apparent that various known structures and configurations may be applied to this cooling unit 150 as long as it can condense the vaporized and gaseous refrigerant R inside the cooling tank 112 and turn it back into a liquid refrigerant R.

The detailed structure and configurations of this cooling unit 150 will be omitted in order to avoid obscuring the gist of the present invention.

However, if necessary, the cooling units 150 may be arranged in a plurality of units that are spaced apart along the periphery of the tank unit 110.

Meanwhile, in the drawings, as an example, the cooling unit 150 is provided on a side part of the vacuum tank 111 constituting the tank unit 110, and is expressed as including a heat transfer member 151 to perform the role of a heat passage in the vacuum space S2 formed between the same and the cooling tank 112.

As the liquid-state refrigerant R decreases, the load on the cooling unit 150 described above cannot but increase, and thus, the level of the refrigerant R must be maintained within the appropriate level region S13.

Meanwhile, the superconducting fault current limiter 1 including a weight sensing unit according to an embodiment of the present invention has the greatest feature of including a weight sensing unit 200 that is capable of measuring the weight of the tank unit 110.

A weight sensing unit 200 is provided on a lower side of the tank unit 110 so as to measure a weight change of the tank unit 110.

For this purpose, in an embodiment, the weight sensing unit 200 may be arranged in a plurality of units with an interval on a bottom surface of the tank unit 110.

This weight sensing unit 200 may utilize a known load cell, and certainly, various known weight sensors may be applied as long as they can measure the weight of the tank unit 110.

The weight sensing unit 200 is intended to replace a level meter (FIG. 1) 160 for measuring the conventional liquid level, and may be used in a refrigerant level measurement method described below.

Roughly speaking, the weight of the tank unit 110 before the refrigerant R is injected into the tank unit 110 is set as a standard weight value, and the weight value of the tank unit at the minimum level and the weight value of the tank unit at the maximum level are measured.

In addition, when the weight of the tank unit 110 while operating the superconducting fault current limiter 1 remains at a difference between the weight of the tank unit at the minimum liquid level and the weight of the tank unit at the maximum liquid level, it can be confirmed that the liquid refrigerant R in the cooling tank 112 is within the appropriate level range.

In this way, the superconducting fault current limiter 1 having a weight sensing unit according to an embodiment of the present invention may check the level of the refrigerant R by recognizing the weight change value of the tank unit measured by the weight sensing unit 200 without a level meter 160 (FIG. 1) used in a conventional superconducting fault current limiter.

Referring again to FIG. 2, the superconducting fault current limiter 1 having a weight sensing unit according to an embodiment of the present invention may minimize an insulation distance d2' between the current-conducting wire 140 and the inner surface of the cooling tank 112, and an insulation distance d1' between the side part of the superconducting element 120 and the inner surface of the cooling tank 112, as the conventional level meter 160 (FIG. 1) is eliminated.

Accordingly, the superconducting fault current limiter 1 having a weight sensing unit according to an embodiment of the present invention may implement a superconducting fault current limiter that has a smaller size and is more compact than a conventional superconducting fault current limiter.

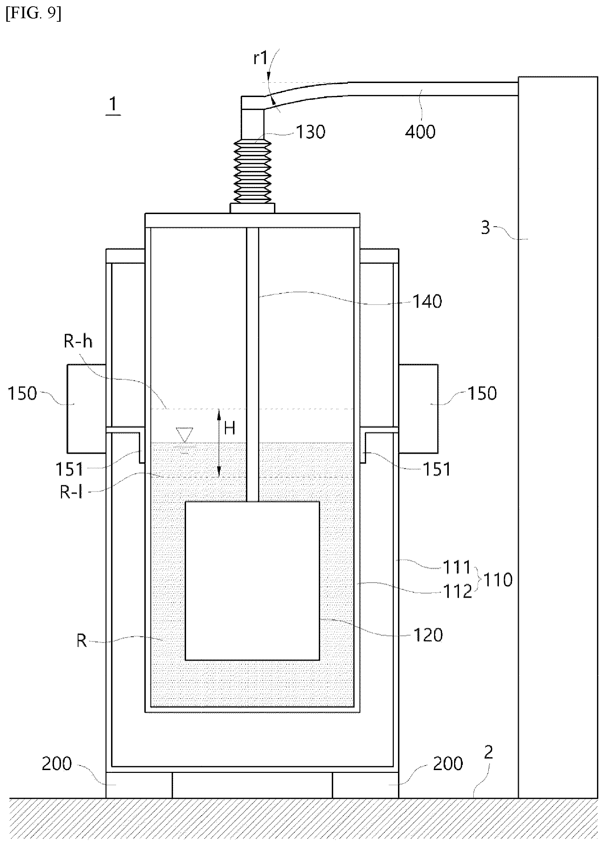

Meanwhile, referring to FIG. 9, the superconducting fault current limiter 1 including a weight sensing unit according to an embodiment of the present invention as described above includes a rigid busbar 400 that is supported on one side by an external structure 3 and electrically connected to an input/output terminal 130 on the other side.

In addition, the gradient of a bottom surface 2 on which the superconducting fault current limiter 1 is installed may not be flat and may be uneven.

Since the busbar 400 described above is usually a rigid body, when the external structure 3 and the superconducting fault current limiter 1 are connected through the busbar 400, there is a possibility that some of the load of the tank unit 110 will be supported through the busbar 400.

In this case, the measurement value measured by the weight sensing unit 200 positioned at the bottom of the tank unit 110 may include a disturbance variable, and thus, the measurement value may not be derived identically to a set measurement value.

For example, if a rigid busbar 400 does not remain to be horizontal and stress r1 is generated, and this stress is applied to a superconducting fault current limiter 1, the measurement value of the weight sensing unit 200 may change.

Accordingly, the superconducting fault current limiter 1 having a weight sensing unit according to an embodiment of the present invention may have a structure that is capable of adjusting the height of the tank unit 100.

In other words, it is to control such that stress is not applied to a part that is coupled to the tank unit 110 and the busbar 400 fixed to the external structure 3.

In an embodiment, as shown in FIG. 10, the weight sensing unit 200 has a structure that allows the busbar 400 to remain horizontal and the gradient of the bottom surface 2 to remain flat.

To this end, the weight sensing unit 200 has a structure including a weight sensor 230 that is supported on a bottom surface 2 where the superconducting fault current limiter 1 is installed, a support frame 210 that is extended to protrude outward from a lower side of the tank unit 110, and a height adjustment screw 220 that is supported on one side of the weight sensor 230 and penetrating the support frame 210.

It is apparent that various known structures and configurations may be applied to this height-adjustable weight sensing unit 200.

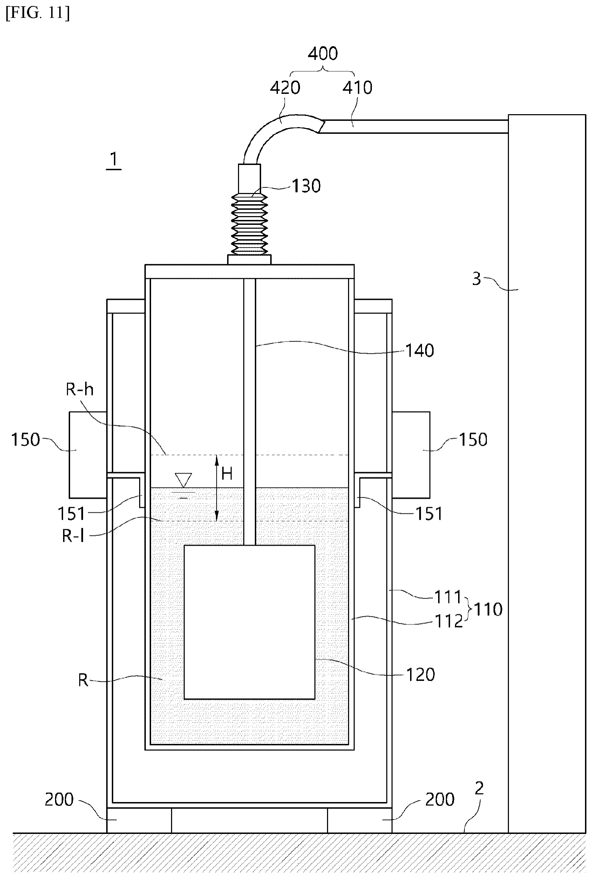

Meanwhile, as in FIG. 11, part or all of the busbar 400 may be composed of a flexible conductor 420.

This flexible conductor 420 may offset or control the stress applied to the busbar 400.

For example, the flexible conductor 420 may be any one of a cable, a shunt flexible busbar or a copper braided flexible busbar.

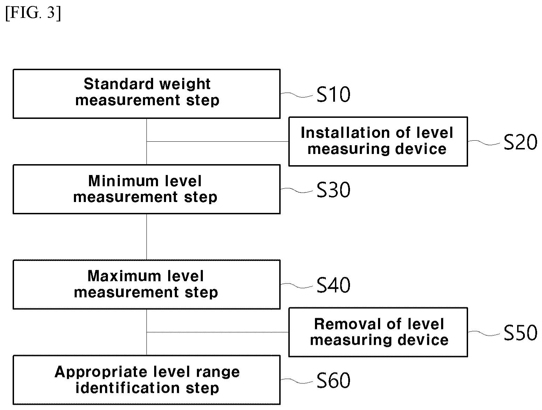

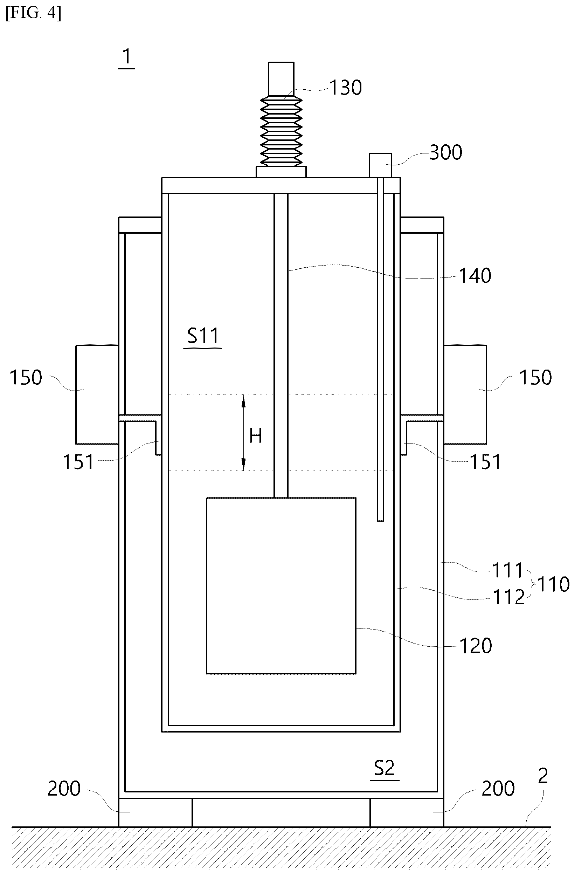

Meanwhile, FIG. 3 is a schematic block diagram showing a method for measuring a refrigerant level using a superconducting fault current limiter having a weight sensing unit according to an embodiment of the present invention, and FIG. 4 is a schematic drawing showing measuring a weight in a state where no refrigerant is injected according to a standard weight measurement step in a method for measuring a refrigerant level using a superconducting fault current limiter having a weight sensing unit according to an embodiment of the present invention.

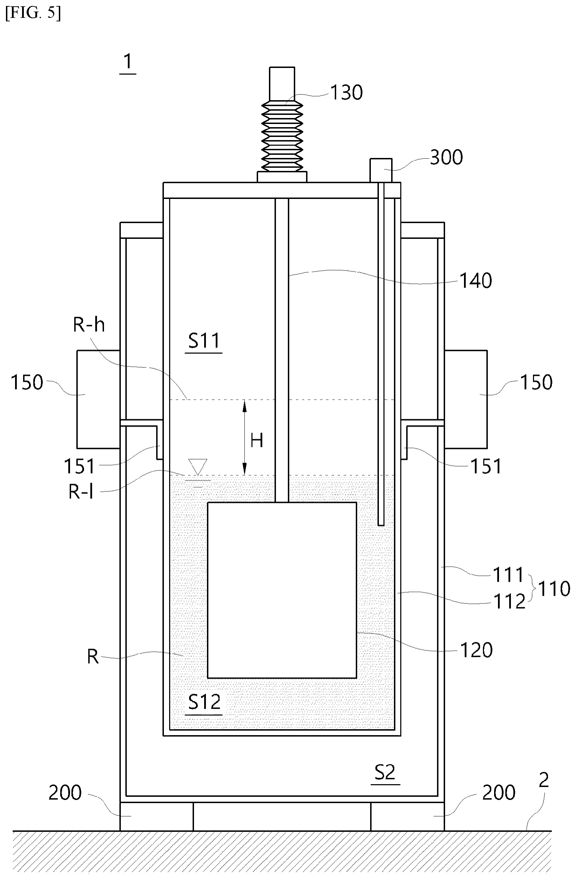

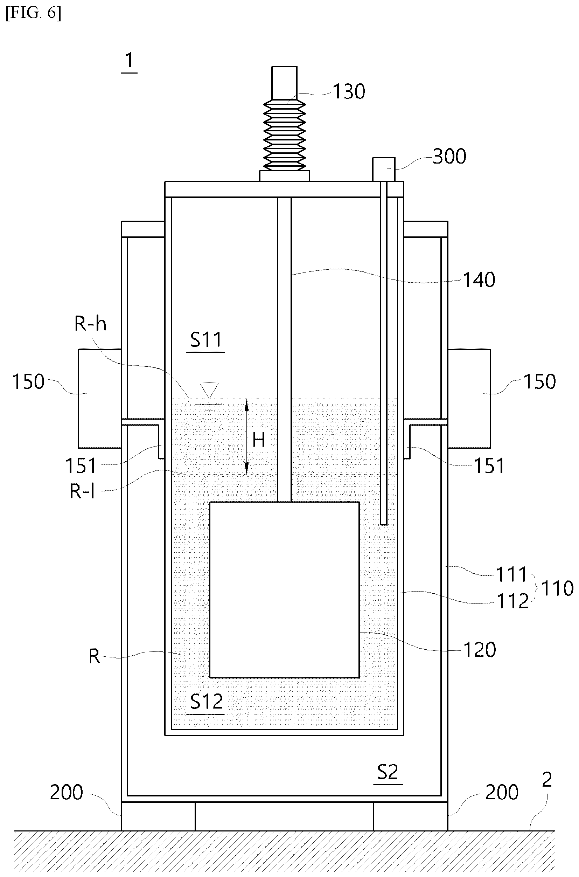

In addition, FIG. 5 is a schematic diagram showing the measurement of a weight in a state where a refrigerant corresponding to the minimum refrigerant level is injected according to a minimum level measurement step in a method for measuring the refrigerant level using a superconducting fault current limiter having a weight sensing unit according to an embodiment of the present invention, and FIG. 6 is a schematic diagram showing the measurement of a weight in a state where a refrigerant corresponding to a maximum refrigerant level is injected according to a maximum level measurement step in a method for measuring the refrigerant level using a superconducting fault current limiter having a weight sensing unit according to an embodiment of the present invention.

Referring to FIG. 2, the method for measuring a refrigerant level using a superconducting fault current limiter having a weight sensing unit according to an embodiment of the present invention is described as follows.

First of all, the method for measuring a refrigerant level using a superconducting fault current limiter having a weight sensing unit according to an embodiment of the present invention largely includes a standard weight measurement step S10, a minimum level measurement step S30, a maximum level measurement step S40, and an appropriate level range identification step S60.

Referring to FIG. 4, in the method for measuring a refrigerant level using a superconducting fault current limiter having a weight sensing unit according to an embodiment of the present invention, the standard weight measurement step S10 measures a weight of the tank unit 110 in a state where the superconducting element 120 does not conduct electricity.

In other words, the weight of the tank unit 110 is measured through the weight sensing unit 200 described above without injecting a refrigerant R into the tank unit 110 to measure a standard weight value of the tank unit 110.

The tank unit 110 includes, in addition to the refrigerant R, components that affect a load, such as a superconducting element 120, an input/output terminal 130 and a current-conducting wire 140.

Accordingly, in order to reliably measure a change in weight value during an operation of the superconducting fault current limiter 1, the weight of the tank unit 110 in which no refrigerant R is injected is first measured through a standard weight measurement step S10.

In this case, the tank unit 110 may be in a state where it is not connected to the busbar 400 and the external structure 3, or may be in a state where it is supported and electrically connected to the busbar 400 and the external structure 3 as shown in FIGS. 10 and 11.

In other words, the installation environment of the superconducting fault current limiter 1 will be determined according to the convenience of an operator who installs and controls the superconducting fault current limiter 1, and the measurement of the standard weight value for the tank unit 110 will be performed accordingly.

Next, referring to FIG. 5, in the method for measuring a refrigerant level using a superconducting fault current limiter having a weight sensing unit according to an embodiment of the present invention, the minimum level measurement step S30 injects a refrigerant R in a liquid state into an internal space S1 of a cooling tank 112 of the tank unit 110 where a standard weight value is measured, so as to reach a minimum refrigerant level R-1.

In addition, the weight of the tank unit 110 into which the refrigerant R is injected is measured through the weight sensing unit 200 described above, so as to measure a minimum level weight value of the tank unit 110.

Meanwhile, in order to check whether the refrigerant R being injected reaches a set minimum refrigerant level R-1 before the minimum level measurement step S30 is performed, the superconducting fault current limiter 1 having a weight sensing unit according to an embodiment of the present invention temporarily includes a level measuring device 300 on one side of the tank unit 110.

In other words, the method further includes installing a level measuring device S20 before performing the minimum level measurement step S30 on the superconducting fault current limiter 1 that has undergone the standard weight measuring step S10.

Accordingly, the liquid refrigerant R is injected into the cooling tank 112 while checking the measurement value of the level measuring device 300, and when the refrigerant R reaches the minimum refrigerant level R-1, the value measured by the weight sensing unit 200 is set as a minimum level weight value of the tank unit 110.

Meanwhile, the level measuring device 300 described above may be a normal level meter.

However, the level measuring device 300 is not limited thereto, and various known means for measuring the level may be used.

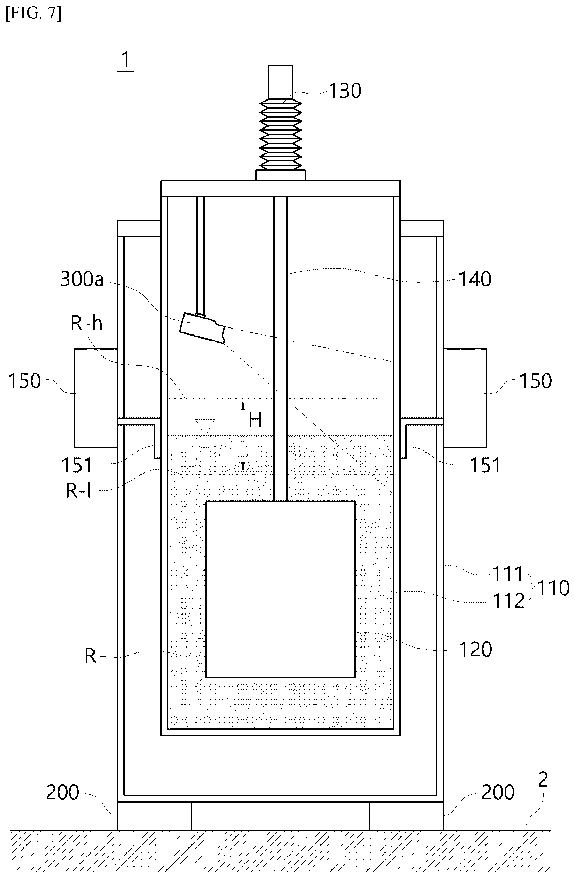

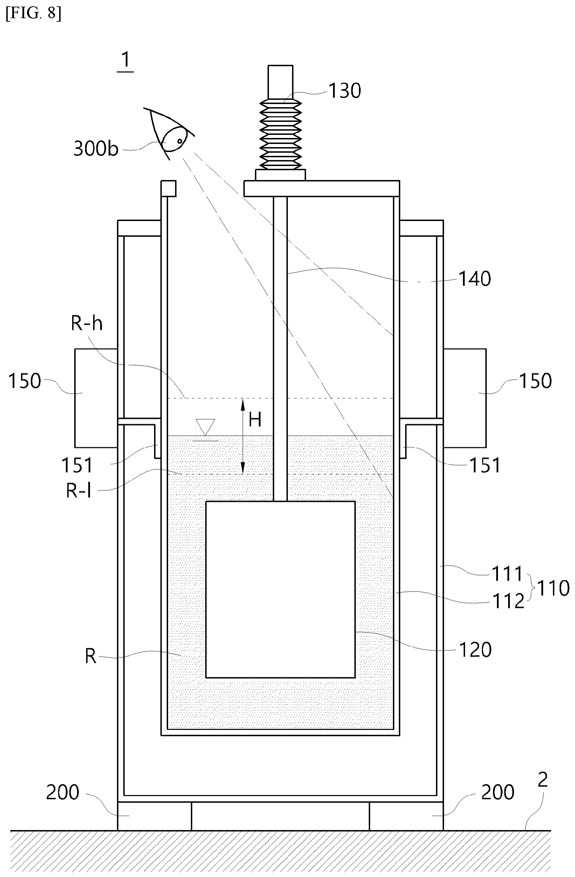

For example, the level measuring device 300 may be a camera 300a installed inside the tank unit 110 as in FIG. 7, and the level of the refrigerant R may be checked with the naked eye 300b as in FIG. 8.

Meanwhile, it is apparent that the level measuring device 300 may use a dip stick or a buoy.

Next, referring to FIG. 6, in the method for measuring a refrigerant level using a superconducting fault current limiter having a weight sensing unit according to an embodiment of the present invention, the maximum level measurement step S40 injects a liquid refrigerant R into an internal space S1 of the cooling tank 112 of the tank unit 110 in which a minimum level weight value was measured through a minimum level measurement step S30 so as to reach a maximum refrigerant level R-h.

In addition, the weight of the tank unit 110 into which the refrigerant R is injected is measured through the weight sensing unit 200 described above, so as to measure a maximum level weight value of the tank unit 110.

Additionally, in the method for measuring the refrigerant level using a superconducting fault current limiter having a weight sensing unit according to an embodiment of the present invention, the appropriate level range identification step S60 inputs the weight of the tank unit 110 corresponding to a difference value between the maximum level weight value and the minimum level weight value as an appropriate level weight value.

In this case, the appropriate level weight value is input as data to an external control system (not shown) that controls the superconducting fault current limiter 1 and is used as a control value for checking the refrigerant R level.

Additionally, in the appropriate level range identification step S60, the amount of the refrigerant R is injected or discharged to compensate for the appropriate level weight value for the operation of the superconducting fault current limiter 1.

Meanwhile, before the appropriate level range identification step S60 described above is performed, it is preferable to perform in advance the step S50 of removing the level measuring device 300 described above installed on the superconducting fault current limiter 1 that has undergone the maximum level measurement step S40.

As described above, the superconducting fault current limiter 1 having a weight sensing unit according to an embodiment of the present invention and the method for measuring a refrigerant level using the same may measure a change in weight of the tank unit 110 using the weight sensing unit 200 and thereby confirm a change in the level of the refrigerant R in the cooling tank 112.

In addition, the distance between the current-conducting wire 140 and the inner surface of the cooling tank 112 and the insulation distances d2', d1' between the superconducting element 120 and the inner surface of the cooling tank 112 may be minimized, thereby enabling the implementation of a superconducting fault current limiter of a smaller size.

In addition, the height of the tank unit 110 supported by the weight sensing unit 200 may be adjusted so as to block stress generated by the busbar 400 connected to the external structure 3.

Moreover, stress generation may be blocked by replacing one side of the busbar 400 connected to the external structure 3 in the superconducting fault current limiter 1 having a weight sensing unit 200 with a flexible conductor.

Although the embodiments of the present invention have been described, the spirit of the present invention is not limited to the embodiments presented in the present specification, and those skilled in the art who understand the idea of the present invention will be able to easily propose other embodiments by modifying, changing, deleting or adding components within the scope of the same spirit, but this will also be considered to fall within the spirit of the present invention.

## Claims

1. A superconducting fault current limiter having a weight sensing unit, comprising:
a tank unit in which a refrigerant in a cryogenic liquid state is accommodated;
a superconducting element that is accommodated in the tank unit and immersed in the refrigerant, and is electrically connected to an input/output terminal that is exposed to an outside of the tank unit by a current-conducting wire;
a cooling unit positioned on a side part of the tank unit to cool the refrigerant; and
a weight sensing unit provided on a lower side of the tank unit to measure a change in weight of the tank unit.

2. The superconducting fault current limiter of claim 1, wherein the weight sensing unit is arranged in plurality.

3. The superconducting fault current limiter of claim 1, wherein the tank unit comprises a cooling tank configured to accommodate the refrigerant and the superconducting element inside, and a vacuum tank that surrounds the cooling tank and forms a vacuum space between the cooling tank and the superconducting element.

4. The superconducting fault current limiter of claim 1, further comprising:
a rigid busbar that is supported on one side by an external structure and electrically connected to the input/output terminal on the other side,
wherein the weight sensing unit adjusts a height of the tank unit.

5. The superconducting fault current limiter of claim 4, wherein the weight sensing unit comprises a weight sensor that is supported on a bottom surface where the superconducting fault current limiter is installed, a support frame that is extended to protrude outward from a lower side of the tank unit, and a height adjustment screw that is supported on one side by the weight sensor and penetrating the support frame.

6. The superconducting fault current limiter of claim 1, further comprising:
a busbar that is supported on one side by an external structure, and electrically connected to the input/output terminal on the other side,
wherein the busbar is composed partly or entirely of a flexible conductor.

7. The superconducting fault current limiter of claim 6, wherein the flexible conductor is composed of any one of a cable, a shunt flexible busbar or a braided flexible busbar.

8. A method for measuring a refrigerant level using a superconducting fault current limiter having a weight sensing unit that is a method for measuring a refrigerant level using the superconducting fault current limiter having a weight sensing unit according to any one of claims 1 to 7, the method comprising:
a standard weight measurement step for measuring a standard weight value of a tank unit by measuring a weight of the tank unit through a weight sensing unit while a superconducting element does not inject a refrigerant in the tank unit in a state of no electrical conduction;
a minimum level measurement step of injecting the refrigerant into the tank unit where the standard weight value is measured to reach a refrigerant minimum level, and then measuring a weight of the tank unit through the weight sensing unit to measure a minimum level weight value of the tank unit;
a maximum level measurement step of injecting the refrigerant into the tank unit where the minimum level weight value is measured to reach a refrigerant maximum level, and then measuring a weight of the tank unit through the weight sensing unit to measure a maximum level weight value of the tank unit; and
an appropriate level range identification step of inputting a weight of the tank unit corresponding to a difference value of the maximum level weight value and the minimum level weight value as an appropriate level range value, and correcting an amount of the refrigerant to correspond to the appropriate level weight value.

9. The method of claim 8, further comprising:
a process of installing a level measuring device prior to performing the minimum level measurement step on a superconducting fault current limiter that has undergone the standard weight measurement step.

10. The method of claim 9, further comprising:
a process of removing the level measuring device installed on a superconducting fault current limiter that has undergone the maximum level measurement step.

11. The method of claim 9, wherein for the level measuring device, any one of a level meter, a camera, a dip stick, a buoy or a naked eye is used.

12. The method of claim 8, wherein the refrigerant minimum level has an interval of 10 to 20 cm from the uppermost surface of the superconducting element.
